# EUROPÄISCHE PATENTANMELDUNG

(11) **EP 3 372 861 A1**
(43) Veröffentlichungstag der Anmeldung: **12.09.2018**
(21) Anmeldenummer: 18155461.9
(22) Anmeldetag: 07.02.2018
(51) Int. Cl.: F16D 13/26, B23P 11/02, F16D 1/091

(54) **VORRICHTUNG ZUR DEMONTIERBAREN, REIBSCHLÜSSIGEN KUPPLUNG DER DREHBEWEGUNG ZWEIER GLEICHACHSIGER BAUTEILE**

(30) Priorität: 07.02.2017 DE 102017102358; 27.03.2017 DE 102017106514
(71) Anmelder: Köllges, Ralf, 41812 Erkelenz (DE)
(72) Erfinder: Köllges, Ralf, 41812 Erkelenz (DE)
(74) Vertreter: Patentanwälte Bauer Vorberg Kayser

(57) **Zusammenfassung**

Die Vorrichtung zur demontierbaren, reibschlüssigen Kupplung zweier gleichachsiger Bauteile hat a) ein inneres Kupplungsteil (22), das eine kegelförmige, äußere Mantelfläche (26) aufweist, b) ein äußeres Kupplungsteil (28), das eine angepasste kegelförmige innere Mantelfläche (30) aufweist, und c) einen Zwischenraum (32), der radial durch die beiden Mantelflächen (26, 30) und axial durch zwei Dichtungen (34), die zwischen den Mantelflächen (26, 30) angeordnet sind, begrenzt ist. In einer gekuppelten Position liegen die kegelförmigen Mantelflächen (26) reibschlüssig aufeinander. In einer gelösten Position ist der Zwischenraum (32) mit Hydraulikfluid unter Druck gefüllt, zumindest ein Kupplungsteil (22) ist dadurch elastisch verformt und die beiden Kupplungsteile (22, 28) sind in Richtung einer gemeinsamen Längsachse reversibel relativ zueinander bewegbar. Es sind eine Vielzahl von Schrauben (48) und ein Ringkörper (42) vorgesehen. Der Ringkörper (42) ist gleichachsig zu den beiden Kupplungsteilen(22, 28), ist mit einem Kupplungsteil (22) verbunden und hat Axialbohrungen (46), die jeweils eine Schraube (48) aufnehmen. Entweder sind in einer Stirnfläche (44) des anderen Kupplungsteils (28) mit den Axialbohrungen (46) fluchtende Gewindebohrungen (52) ausgebildet, oder die Axialbohrungen (46) sind als Gewindebohrungen (52) ausgebildet und in axialer Verlängerung der Axialbohrungen (46) befindet sich eine Stirnfläche (44) des anderen Kupplungsteils (28).

## Beschreibung

Die Erfindung bezieht sich auf eine Vorrichtung zur demontierbaren, reibschlüssigen Kupplung zweier gleichachsiger Bauteile zur Übertragung von Drehmomenten zwischen diesen Bauteilen. Sie bezieht sich insbesondere auf ein mechanisches Werkzeug zur Montage und Demontage derartiger reibschlüssiger Kupplungen.

Aus der EP 2 212 575 B1 ist eine Vorrichtung bekannt, mit der sich zwei gleichachsige Teile reibschlüssig kuppeln lassen. Die Vorrichtung ist zerstörungsfrei demontierbar und kann nach einer Montage beliebig oft wieder montiert werden. Sie weist ein inneres Kupplungsteil mit kegelförmiger äußerer Mantelfläche und ein äußeres Kupplungsteil mit entsprechend kegelförmiger innerer Mantelfläche auf. Zwischen diesen beiden Mantelflächen befindet sich ein Zwischenraum, der weiterhin durch zwei Dichtungen begrenzt ist, die sich zwischen den Mantelflächen befinden. Der Zwischenraum ist über einen Hydraulikanschluss zugänglich. Wird der Zwischenraum mit Hydraulikfluid unter Druck gefüllt, verformt sich mindestens ein Kupplungsteil in radialer Richtung elastisch. In diesem Zustand können die beiden Kupplungsteile in Richtung einer Längsachse verschoben werden. Dieses Verschieben geschieht durch ein hydraulisches Werkzeug. Es sind damit zwei Hydraulikaggregate notwendig, nämlich ein Hydraulikaggregat, das den Zwischenraum versorgt und ein Hydraulikaggregat, das mit dem hydraulischen Werkzeug verbunden ist und für die axiale Verschiebung sorgt.

Zum Stand der Technik wird weiterhin auf EP 2 050 975 B1 verwiesen. Sie zeigt Ausbildungen des hydraulischen Werkzeugs, das für die axiale Verschiebung des einen Kupplungsteils gegenüber dem anderen ausgelegt und zuständig ist. Dabei befindet sich der Hydraulikanschluss im hydraulischen Werkzeug. Auch in dieser Ausbildung werden zwei separate Hydraulikaggregate benötigt.

In einigen Ausführungen der beiden genannten Veröffentlichungen hat ein Kupplungsteil radial deutlich größere Abmessungen als das andere. Vorzugsweise ist das äußere Kupplungsteil deutlich dicker, wenn eine radial nach innen gerichtete Kraft durch die Vorrichtung ausgeübt werden soll. Wenn der Zwischenraum mit Hydraulikfluid unter Druck gefüllt wird, wird daher bevorzugt das innere Kupplungsteil elastisch verformt.

Es ist vorteilhaft, eine Mantelfläche mit einer den Haftreibungskoeffizienten erhöhenden Beschichtung zu versehen. In der gekuppelten Position liegen dann die beiden Mantelflächen unter erhöhter Reibung aneinander, sodass höhere Drehmomente übertragen werden können. Vorzugsweise befindet sich diese Beschichtung axial im Bereich zwischen den beiden Dichtungen. Dadurch wird vermieden, dass die Dichtungen in Kontakt mit der Beschichtung kommen. Das Kupplungsteil, das die Dichtungen trägt, ist auch vorzugsweise mit der Beschichtung versehen. Das andere Kupplungsteil hat keine Beschichtung.

Nachteilig bei den vorbekannten Vorrichtungen ist, dass zwei separate Hydraulikaggregate oder ein Hydraulikaggregat mit einem speziellen Verteiler benötigt werden. Derartige Aggregate sind teuer, zudem müssen sie korrekt und mit Erfahrung bedient werden. Die Vorbereitungen für ihren Einsatz sind in der Regel aufwendig. Es sind auch vor Ort nicht immer geeignete, funktionierende Hydraulikaggregate vorrätig, beispielsweise an Bord eines Schiffes oder in einer einsam gelegenen Anlage. Es müssen auch die Vorschriften über die Verwendung von Hochdruck-Hydraulik beachtet und eingehalten werden.

Hier setzt nun die Erfindung ein. Sie hat sich zur Aufgabe gemacht, die hydraulische Huberzeugung durch ein möglichst kostengünstiges und einfaches mechanisches System zu ersetzen, das insgesamt auch ein geringeres Gewicht hat, und dadurch in der Regel ein Hydraulikaggregat einzusparen.

Diese Aufgabe wird gelöst durch eine Vorrichtung zur demontierbaren, reibschlüssigen Kupplung der Drehbewegung zweier gleichachsiger Bauteile, insbesondere zweier Wellen oder einer Welle und einer Nabe, mit a) einem inneren Kupplungsteil, das eine kegelförmige, äußere Mantelfläche aufweist, mit b) einem äußeren Kupplungsteil, das eine der Kegelform der äußeren Mantelfläche angepasste kegelförmige innere Mantelfläche aufweist, und c) mit einem Hydraulikanschluss, der mit einem Zwischenraum kommuniziert, der radial durch die beiden Mantelflächen und axial durch zwei Dichtungen, die zwischen den Mantelflächen angeordnet sind, begrenzt ist, wobei i) in einer gekuppelten Position der Kupplung die kegelförmigen Mantelflächen reibschlüssig aufeinander aufliegen und ii) in einer gelösten Position der Zwischenraum zwischen den beiden Mantelflächen mit Hydraulikfluid unter Druck gefüllt ist, zumindest ein Kupplungsteil elastisch verformt ist und der Reibschluss aufgehoben ist und die beiden Kupplungsteile in Richtung einer gemeinsamen Längsachse reversibel relativ zueinander bewegbar sind, dadurch gekennzeichnet, dass eine Vielzahl von Schrauben und ein Ringkörper vorgesehen sind, dass der Ringkörper gleichachsig zu den beiden Kupplungsteilen ist, dass der Ringkörper mit einem Kupplungsteil verbunden, insbesondere lösbar verbunden ist, dass der Ringkörper eine der Anzahl der Schrauben entsprechende Anzahl von Axialbohrungen hat, die jeweils die Schrauben aufnehmen, oder Abstützbereiche aufweist, an denen die Schrauben (48) anliegen, und dass entweder
- in einer Stirnfläche des anderen Kupplungsteils mit den Axialbohrungen oder Abstützbereichen fluchtende Gewindebohrungen ausgebildet sind,
- oder die Axialbohrungen als Gewindebohrungen ausgebildet sind und in axialer Verlängerung der Axialbohrungen sich eine Stirnfläche des anderen Kupplungsteils befindet.

Durch den Ringkörper und die Schrauben wird in einfacher Weise eine mechanische Hubvorrichtung erhalten. Sie arbeitet axial. Die Schrauben stützen sich entweder mit ihrem Gewinde in den als Gewindebohrungen ausgeführten Axialbohrungen des Ringkörpers ab und sind in Kontakt mit einer Stirnfläche des anderen Kupplungsteils, das nicht mit dem Ringkörper verbunden ist. In dieser Alternative kann auf diese Weise beim Spannen das andere Kupplungsteil vom Ringkörper weggedrückt werden oder beim Lösen die Bewegung des Kupplungsteils aufgehalten und verlangsamt werden, wenn die Schrauben entsprechend gedreht werden. Oder die Schrauben greifen in Gewindebohrungen, die im anderen Kupplungsteil ausgebildet oder mit diesem verbunden sind, diese Gewindebohrungen fluchten mit den Axialbohrungen. Die Axialbohrungen nehmen die Schrauben frei auf, ohne mit einem eventuell dort vorhandenen Außengewindebereich der Schrauben zusammen zu wirken. Dadurch ist eine relative Bewegung möglich. Der Ringkörper stützt die Schraubenköpfe axial in Zugrichtung und/oder im Druckrichtung ab. Wenn die Schrauben entsprechend gedreht werden, greifen sie z.B. zunehmend tiefer in die Gewindebohrungen ein, sodass das andere Kupplungsteil zum Ringkörper hin bewegt wird. Ebenso ist eine Bewegung in Gegenrichtung durchführbar, wenn die Schrauben sich entsprechend am Ringkörper abstützen.

Der Ringkörper zunächst an einem Kupplungsteil angebracht oder ist bereits mit diesem verbunden. Anschließend werden die Schrauben nach und nach so weit gedreht, wie es für das Aufschieben oder Lösen notwendig ist. Das Aufschieben bzw. Lösen erfolgt schrittweise.

Im Vergleich zum Stand der Technik wird daher für das axiale Verschieben mehr Zeit gebraucht. Die einzelnen Schrauben müssen nach und nach betätigt werden. Sie dürfen nur jeweils so weit betätigt werden, dass ein auftretendes Kippmoment unschädlich bleibt. Das Drehen der Schrauben sollte vorzugsweise weggesteuert erfolgen. Vorzugsweise werden zwei diagonal gegenüberliegende Schrauben gleichzeitig betätigt und gleichzeitig um denselben Winkel gedreht. Anschließend werden dann vorzugsweise zwei andere, gegenüberliegende Schrauben, die möglichst weit entfernt von den ersten beiden Schrauben sind, ebenfalls gleichzeitig und jeweils um denselben Winkel gedreht usw.. Vorzugsweise sind die Schrauben mit einer Markierung versehen, die es erlaubt, den Drehwinkel beim Verdrehen unmittelbar zu erfassen. Beispielsweise haben alle Schrauben auf ihrer Kopfseite einen Pfeil. Anfänglich sind alle Pfeile der Schrauben einheitlich, beispielsweise parallel, ausgerichtet. Wenn alle Schrauben einmal um einen vorgegebenen Winkel, beispielsweise 90°, verdreht wurden, sind alle Pfeile wieder parallel.

Weil nun im Vergleich zum Stand der Technik für das Aufschieben und auch zum Lösen mehr Zeit gebraucht wird, muss auch im Zwischenraum für längere Zeit ein hoher Druck aufrechterhalten werden. Es hat sich nun herausgestellt, dass das zugehörige Hydraulikaggregat nur einmal den ausreichenden Druck liefern muss, und danach nicht mehr nachliefern muss, wenn die Dichtungen ausreichend hochwertig sind. Durch hochwertige Dichtungen wird erreicht, dass die Hydraulikflüssigkeit nicht axial austreten kann. Je hochwertiger die Dichtungen ausgeführt sind, umso geringer ist die Leckrate und umso größere Zeit steht zur Verfügung, um die beiden Kupplungsteile gegeneinander in axialer Richtung mittels der Schrauben zu verschieben.

Das Verschieben kann in Richtung Aufschieben, also Einkuppeln, und auch in Richtung Trennen erfolgen.

Die mechanische Huberzeugung vereinfacht den Platzbedarf und die Montage der Vorrichtung. Es wird eine deutliche Gewichtsreduktion erreicht. Die mechanische Hubvorrichtung ist erheblich kleiner als ein hydraulisches Werkzeug. Sie benötigt daher weniger Raum, den man im Bereich der beiden gleichachsigen Bauteile vorsehen und freihalten muss. Die mechanische Huberzeugung stellt eine sehr kostengünstige Alternative zu einem hydraulischen Werkzeug, zum Beispiel einer Hydraulikmutter, dar. Es sind weniger Schläuche anzuschließen, die Bedienung ist einfacher und kann von weniger geschulten Kräften durchgeführt werden. Die Gefahr des Versagens von Dichtungen wird durch die Reduzierung der hydraulischen Komponenten verringert.

Vorteilhafterweise ist der Ringkörper von seinem Kupplungsteil lösbar, beispielsweise ist er schraubverbunden. Der Ringkörper kann entfernt und danach auch für andere Vorrichtungen verwendet werden. Der Ringkörper kann auch geteilt ausgebildet sein, beispielsweise aus zwei Teilstücken, die zusammenfügbar sind, aufgebaut sein. Für die Demontage wird er dann in seine zwei Teilstücke zerlegt und für einen späteren Einsatz an derselben oder einer anderen Vorrichtung aufbewahrt. Bei einem Verschleiß können der Ringkörper und/oder Schrauben ausgetauscht werden. Im Vergleich hierzu ist eine Reparatur eines hydraulischen Werkzeugs in der Regel sehr aufwendig und benötigt spezielle Bauteile. Es ist auch möglich, dass der Ringkörper am zugehörigen Kupplungsteil ausgebildet ist, zum Beispiel einstückig.

Es ist möglich, dass der Ringkörper an der Vorrichtung verbleibt. Beispielsweise kann er zusätzlich die Funktion eines Endanschlags mit übernehmen. Dies bietet sich insbesondere dann an, wenn die Schrauben auf Zug und nicht auf Druck arbeiten. In der ersten Alternative des Anspruchs 1 können die Schrauben auf Zug und/oder Druck arbeiten. In der zweiten Alternative arbeiten sie auf Druck. Druck bedeutet, dass beim Anziehen der Schrauben das entsprechende Kupplungsteil vom Ringkörper weg bewegt wird.

Vorzugsweise weist dasjenige Kupplungsteil, mit dem der Ringkörper verbunden ist, eine Abstützfläche für den Ringkörper auf. Im Betrieb liegt der Ringkörper an dieser Abstützfläche an. In sie werden die Reaktionskräfte eingeleitet, die auftreten, wenn die Schrauben gespannt bzw. entspannt werden. Die Abstützfläche kann als ein Kragen oder ein Gewinde oder dergleichen ausgeführt sein.

Vorteilhaft ist eine die Reibung erhöhende Beschichtung einer Wand eines Kupplungsteils, die mit einem der Bauteile in Kontakt kommt, beispielsweise der Innenwand des inneren Kupplungsteils. Dadurch wird die reibschlüssige Verbindung mit einer Welle, die sich im Inneren Kupplungsteil befindet, verbessert. Vorteilhaft ist auch eine derartige Beschichtung einer Mantelfläche und hier insbesondere des axialen Bereichs desjenigen Kupplungsteils, an dem die Dichtungen angeordnet sind, zwischen diesen Dichtungen. Es können höhere Drehmomente übertragen werden. Eine Erhöhung des Haftreibungskoeffizienten µ vom Normalwert µ = 0,14 für Stahl/Stahl bzw. µ = 0,18 für Stahl/Stahl entfettet auf Werte µ = 0,3 und höher, z.B. µ = 0,7 ist dadurch möglich.

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die im Folgenden anhand der Zeichnung näher erläutert werden. In der Zeichnung zeigen
- Fig. 1: einen Axialschnitt durch eine erste Ausführung der Vorrichtung in der gelösten Position,
- Fig. 2: ein Axialschnitt wie Fig. 1, jedoch nun in der gekuppelten Position,
- Fig. 3: eine Ansicht in axialer Richtung gesehen von links in Fig. 1 auf die Vorrichtung,
- Fig. 4: einen Axialschnitt durch eine zweite Ausführung der Vorrichtung, in der gelösten Position,
- Fig. 5: einen Axialschnitt durch eine dritte Ausführung der Vorrichtung, in der gelösten Position, und
- Fig. 6: eine Draufsicht in axialer Richtung auf einen Ringkörper.

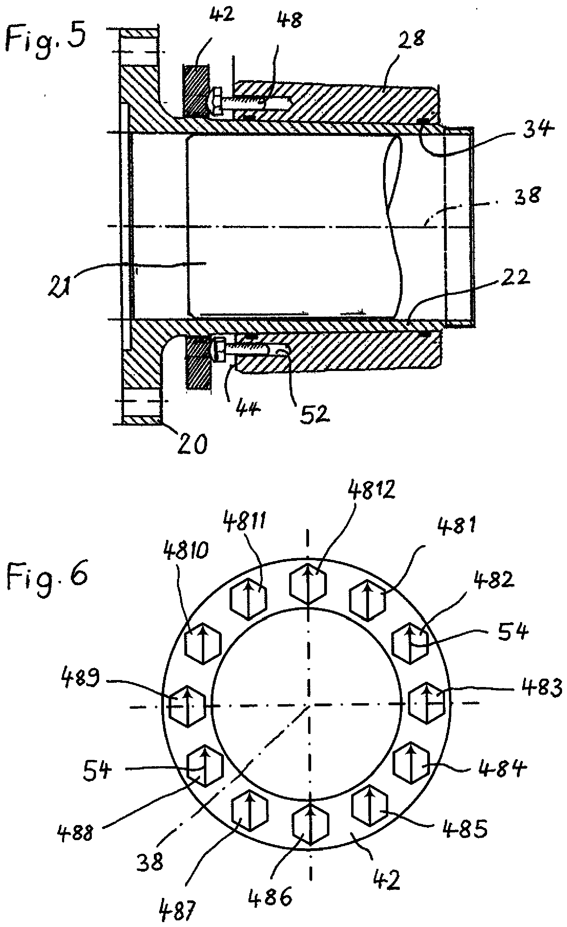

Die Vorrichtung dient zur Übertragung von Drehmomenten zwischen zwei gleichachsigen Bauteilen. Bei diesen Bauteilen kann es sich um zwei Wellen oder um eine Welle und eine Nabe oder um eine andere Anordnung handeln. In den Figuren ist ein Fall dargestellt, bei dem ein Bauteil, das einen Flansch 20 aufweist, ein inneres Kupplungsteil 22 ausbildet, dies in den Ausführungsbeispielen einstückig realisiert. Ein zweites Bauteil, zum Beispiel eine Welle 21, Achse oder dergleichen, das gekuppelt werden soll, ist in Fig. 5 dargestellt, es findet seinen Platz innerhalb einer zylindrischen Innenbohrung 24 des inneren Kupplungsteils 22. Das innere Kupplungsteil 22 hat eine kegelförmige, äußere Mantelfläche 26. Diese wird von einem äußeren Kupplungsteil 28, genauer gesagt von einer der Kegelform der äußeren Mantelfläche 26 angepassten kegelförmigen inneren Mantelfläche 30 dieses äußeren Kupplungsteils 28 umgriffen. Es hat die Form eines Rohrstücks. Wie alle Figuren zeigen, ist die Wandstärke des äußeren Kupplungsteils 28 mindestens zweimal, insbesondere mindestens viermal so groß wie die Wandstärke des inneren Kupplungsteils 22.

Zwischen den beiden Mantelflächen 26, 30 befindet sich ein Zwischenraum 32. Dieser wird axial durch zwei Dichtungen 34 begrenzt. Diese befinden sich jeweils in Nähe der axialen Enden des äußeren Kupplungsteils 28. Sie sind am äußeren Kupplungsteil 28 angeordnet. Ein Hydraulikanschluss (bekannt, nicht dargestellt) kommuniziert mit diesem Zwischenraum 32. Wenn der Zwischenraum 32 mit Hydraulikfluid unter Druck gefüllt wird, werden beide Kupplungsteile 22, 28 elastisch deformiert. Das innere Kupplungsteil 22 wird zusammengepresst, es stützt sich dabei auf dem zweiten Bauteil ab. Das äußere Kupplungsteils 28 wird nach außen radial verformt. Die Dichtungen 34 sind am äußeren Kupplungsteil 28 angeordnet, können aber auch am inneren Kupplungsteil 22 vorgesehen sein. Wenn der Zwischenraum 32 mit Hydraulikflüssigkeit unter Druck gefüllt ist, ist eine Bewegung der beiden Kupplungsteile 22, 28 in axialer Richtung gegeneinander möglich. Die axiale Richtung verläuft parallel zu einer Achslinie 38, die die Zentrallinie der beiden Mantelflächen 26, 30 und hier auch der zylindrischen Innenbohrung 24 ist. Eine plastische Verformung auch nur eines der beiden Kupplungsteile 22, 28 findet nicht statt.

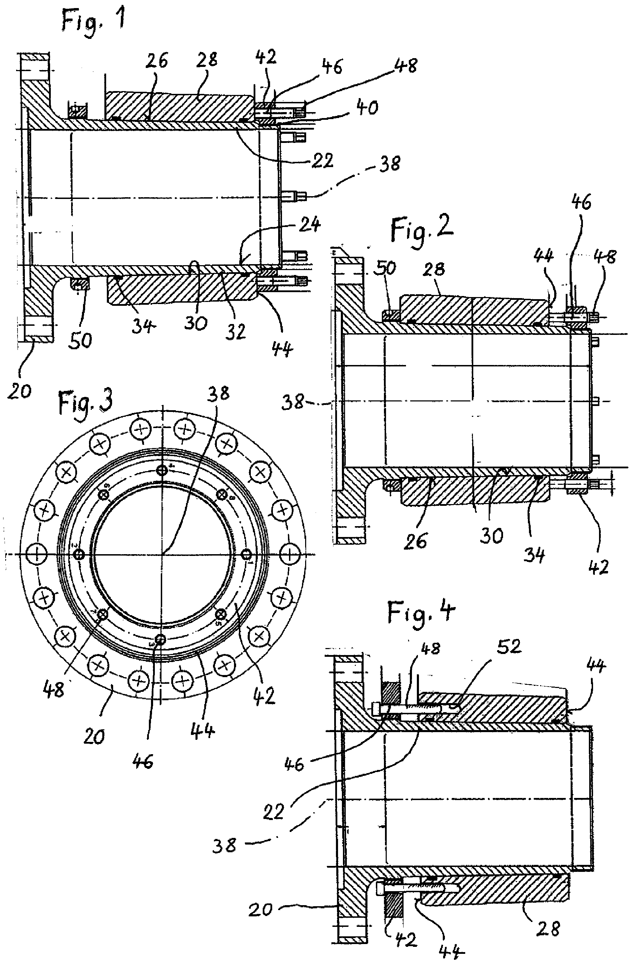

Im Folgenden wird das erste Ausführungsbeispiel nach den Figuren 1 bis 3 besprochen. Die anderen Ausführungsbeispiele werden danach besprochen, jedoch nur insoweit, als sie sich vom ersten Ausführungsbeispiel unterscheiden.

Am vom Flansch 20 entfernten Ende des inneren Kupplungsteils 22 ist ein Außengewinde 40 ausgebildet. Es befindet sich in einem Bereich kleineren Außendurchmessers als die äußere Mantelfläche 26. Dadurch wird die Montage durch Aufschieben des äußeren Kupplungsteils 28 auf die äußere Mantelfläche 26 nicht behindert. Das Außengewinde 40 befindet sich axial außerhalb der äußeren Mantelfläche 26. Es befindet sich am freien Ende des inneren Kupplungsteils 22. Es befindet sich außerhalb des Bereichs, in dem sich das äußere Kupplungsteil 28 relativ zum inneren Kupplungsteil zwischen der gekuppelten Position und der gelösten Position 22 bewegt, wie ein Vergleich der Figuren 1 und 2 zeigt.

Auf das Außengewinde 40 ist ein Ringkörper 42 aufgeschraubt. Seine Ringsachse fällt mit der Achslinie 38 zusammen. Der Ringkörper 42 hat einen Außendurchmesser, der vorzugsweise im Bereich des Außendurchmessers des äußeren Kupplungsteils 28 liegt, jedenfalls sich von diesem Außendurchmesser vorzugsweise nur um plus/minus 30 % unterscheidet. Das Außengewinde 40 bildet eine Abstützfläche für den Ringkörper 42. Dem Ringkörper 42 gegenüberliegend weist das äußere Kupplungsteil 28 eine radiale Stirnfläche 44 auf.

Im Ringkörper 42 ist eine Vielzahl von Axialbohrungen 46 ausgebildet. Sie sind im ersten Ausführungsbeispiel als Gewindebohrungen realisiert. Sie sind gleichmäßig über den Umfang verteilt. Wie Figur 3 zeigt, sind 8 derartige Gewindebohrungen vorgesehen. In die einzelnen Axialbohrungen 46 sind jeweils Schrauben 48 eingeschraubt. Die Köpfe dieser Schrauben 48 befinden sich auf der freien Seite des Ringkörpers 42. Die Bolzenenden der Schrauben 48 liegen an der Stirnfläche 44 an. Werden die Schrauben 48 ausgehend von der gelösten Position gemäß Figur 1 angezogen, wird das äußere Kupplungsteil 28 in den Figuren nach rechts verschoben und erreicht die gekuppelte Position, wie sie in Figur 2 dargestellt ist.

Zwischen dem Flansch 20 und dem äußeren Kupplungsteil 28 befindet sich ein Endanschlag 50, der am inneren Kupplungsteil 22 lösbar befestigt ist, insbesondere aufgeschraubt oder durch Schrauben 48 ist. Er begrenzt die axiale Bewegung des äußeren Kupplungsteils 28. Dadurch ist die gekuppelte Position definiert, siehe Figur 2.

In einer nicht dargestellten Variante des 1. Ausführungsbeispiels ist es möglich, den Endanschlag 50 so auszubilden, wie den Ringkörper 42, also mit Axialbohrungen 46 zu versehen und in diesen Schrauben 48 anzuordnen. Auf diese Weise kann durch Betätigen der Schrauben 48 das äußere Kupplungsteil 28 aus der Position gemäß Figur 1 in die Position gemäß Figur 2 gezogen bzw. die Rückbewegung aus der Position gemäß Figur 2 in die Position gemäß Figur 1 gesteuert erfolgen.

Im zweiten Ausführungsbeispiel gemäß Figur 4 befindet sich der Ringkörper 42 (wie eben für die Variante des ersten Ausführungsbeispiels beschrieben) zwischen dem äußeren Kupplungsteil 28 und dem Flansch 20. Er kann jedoch auch am gleichen Ort wie im ersten Ausführungsbeispiel angeordnet sein. Die Axialbohrungen 46 können als Gewindebohrungen oder als Bohrungen mit etwas Übermaß gegenüber den Schrauben 48 als normale Bohrungen ausgeführt sein, sodass die Schrauben 48 sich in ihnen frei zumindest axial bewegen können. In der gegenüberliegenden Stirnfläche 44 des äußeren Kupplungsteils 28 sind Gewindebohrungen 52 ausgebildet, die mit den Axialbohrungen 46 fluchten. Sie sind als Sackbohrungen ausgeführt. Durch Anziehen der Schrauben 48 wird das äußere Kupplungsteil 28 zum Ringkörper 42 hingezogen oder von diesem weggedrückt. Es kann so die gekuppelte Position ausgehend von der gelösten Position, die Figur 4 zeigt, erreicht werden.

Das zweite Ausführungsbeispiel kann mit dem ersten Ausführungsbeispiel kombiniert werden. Dadurch wird sowohl das Aufschieben oder Ziehen des äußeren Kupplungsteils 28 in die gekuppelte Position als auch die Bewegung in Gegenrichtung erreicht.

Das zweite Ausführungsbeispiel kann auch wie folgt abgewandelt werden: Einerseits können sich die Schraubenköpfe der Schrauben 48 an einer Radialfläche des Flansch 20 abstoßen, sodass bei Drehen der Schrauben 48 das äußere Kupplungsteil 28 vom Ringkörper 42 wegbewegt wird. Andererseits ist es möglich, Schrauben 48 zu verwenden, die einen Schraubenkopf nicht am Ende, sondern im Bereich des Bolzens aufweisen. Sie ragen dann mit einem Ende des Bolzens in die Axialbohrungen 46 des Ringkörpers 42. Ihr Schraubenkopf stützt sich an derjenigen Radialfläche des Ringkörpers 42 ab, die dem äußeren Kupplungsteil 28 und damit auch den Gewindebohrungen 52 gegenüberliegt.

Im dritten Ausführungsbeispiel gemäß Fig. 5 sind im Unterschied zu Fig. 4 keine Axialbohrungen 46 im Ringkörper 42 ausgebildet. Es werden weitgehend normale Schrauben 48, wie den Figuren dargestellt, verwendet, deren Schraubenköpfe sich an der genannten Radialfläche des Ringkörpers 42 abstützen, die dem äußeren Kupplungsteil 28 und damit auch den Gewindebohrungen 52 gegenüberliegt. Vorzugsweise sind die Schraubenköpfe leicht ballig ausgebildet, wie dargestellt.

Der Vorteil von Axialbohrungen 46 und zugleich Gewindebohrungen 52 liegt darin, dass das äußere Kupplungsteil 48 bei den Verschiebebewegungen nicht gegenüber dem inneren Kupplungsteil 22 rotieren, sondern zwangsweise sich nur axial bewegen kann. Wenn die Axialbohrungen 46 ihrerseits mit Innengewinde ausgerüstet sind, wie im zweiten Ausführungsbeispiel nach Fig. 4 beschrieben, können die Gewindebohrungen 52 als einfache Bohrungen ohne Gewinde ausgeführt sein.

Figur 6 zeigt den Ablauf bei einer Betätigung der Vorrichtung, nämlich der Schrauben 48, wenn das eine, hier das äußere Kupplungsteil 28, gegenüber dem anderen, hier das innere Kupplungsteil 22, verschoben wird. Die Fig. 6 wird im Folgenden für den Zustand gemäß Fig. 1 beschrieben, der Ringkörper 42 gemäß Figur 1 ist durch den Ringkörper 42 gemäß Figur 6 realisiert. In der gezeigten Anfangsstellung, wie sie auch Figur 1 zeigt, sind die freien Enden aller Schrauben 48 in Kontakt mit der Stirnfläche 44. Die Anordnung ist so getroffen, dass alle Schrauben 48 im gleichen Drehzustand sind, siehe Fig. 6. Von diesem Zustand ausgehend werden nun die Schrauben 481 und 487 gleichzeitig um 90° im Uhrzeigersinn gedreht. Wie Figur 6 zeigt, sind alle Schrauben 48 mit einer Markierung 54 versehen, die ihren jeweiligen Drehzustand unmittelbar erkennen lässt. Im Ausführungsbeispiel ist die Markierung 54 ein Pfeil. Sie kann aber auch durch einen randseitigen Punkt, einen Vorsprung oder dergleichen realisiert sein.

Im nächsten Schritt werden die Schrauben 484 und 4810 gleichzeitig um 90° im Uhrzeigersinn gedreht. Diese Schrauben sind am weitesten entfernt von den zuvor angezogenen Schrauben 481 und 487. Der Vorgang wird weiter durchgeführt mit den Schrauben 486 und 4812, anschließend mit den Schrauben 485 und 4811. Dann ist ein Zustand erreicht, bei dem wieder alle Pfeile parallel stehen, wie im Ausgangszustand, nun aber in der Figur von links nach rechts orientiert. Im nächsten Schritt wird wieder mit den Schrauben 481 und 487 gleichzeitig begonnen, diese werden wiederum um 90° gedreht usw.. Ebenso erfolgt das Lösen.

In einer Weiterentwicklung sind die Markierungen 54 einstellbar, insbesondere drehbar an den Schraubenköpfen angeordnet. Im Ausgangszustand, wie ihn Fig. 1 zeigt, werden alle Schrauben 48 zunächst auf gleichmäßigen Kontakt, insbesondere Berührung, der Stirnfläche 44 angezogen. Anschließend werden alle Markierungen 54 in einer Richtung, z.B. parallel zueinander, ausgerichtet. Danach beginnt das oben beschriebene paarweise Anziehen.

Die Vorrichtung zur demontierbaren, reibschlüssigen Kupplung zweier gleichachsiger Bauteile hat a) ein inneres Kupplungsteil 22, das eine kegelförmige, äußere Mantelfläche 26 aufweist, b) ein äußeres Kupplungsteil 28, das eine angepasste kegelförmige innere Mantelfläche 30 aufweist, und c) einen Zwischenraum 32, der radial durch die beiden Mantelflächen 26, 30 und axial durch zwei Dichtungen 34, die zwischen den Mantelflächen 26, 30 angeordnet sind, begrenzt ist. In einer gekuppelten Position liegen die kegelförmigen Mantelflächen 26 reibschlüssig aufeinander. In einer gelösten Position ist der Zwischenraum 32 mit Hydraulikfluid unter Druck gefüllt, zumindest ein Kupplungsteil 22 ist dadurch elastisch verformt und die beiden Kupplungsteile 22, 28 sind in Richtung einer gemeinsamen Längsachse reversibel relativ zueinander bewegbar. Es sind eine Vielzahl von Schrauben 48 und ein Ringkörper 42 vorgesehen. Der Ringkörper 42 ist gleichachsig zu den beiden Kupplungsteilen22, 28, ist mit einem Kupplungsteil 22 verbunden. Er hat Axialbohrungen 46, die jeweils eine Schraube 48 aufnehmen, oder Abstützbereiche für eine Schraube, die in eine Gewindebohrung 52 eingeschraubt ist. Entweder sind in einer Stirnfläche 44 des anderen Kupplungsteils 28 mit den Axialbohrungen 46 fluchtende Gewindebohrungen 52 ausgebildet, oder die Axialbohrungen 46 sind als Gewindebohrungen 52 ausgebildet und in axialer Verlängerung der Axialbohrungen 46 befindet sich eine Stirnfläche 44 des anderen Kupplungsteils 28.

Vorzugsweise gilt für alle Ausführungen, dass der Ringkörper 42 entweder eine der Anzahl der Schrauben 48 entsprechende Anzahl von Axialbohrungen 46, die als Gewindebohrungen 52 ausgebildet sind und die jeweils die Schrauben 48 aufnehmen, und in axialer Verlängerung der Axialbohrungen 46 sich eine Stirnfläche 44 des anderen Kupplungsteils 28 befindet,
oder eine der Anzahl der Schrauben 48 entsprechende Anzahl von Abstützbereiche aufweist, an denen die Schrauben 48 anliegen, und in einer Stirnfläche 44 des anderen Kupplungsteils 28 mit den Abstützbereichen fluchtende Gewindebohrungen 52 ausgebildet sind.

Die erste Alternative ist im ersten Ausführungsbeispiel dargestellt, die zweite Alternative ist im dritten Ausführungsbeispiel dargestellt. Auch Mischformen mit Bohrungen sowohl im Ringskörper 42 als auch im anderen Kupplungsteil 28 sind möglich, siehe Fig. 4, also das zweite Ausführungsbeispiel.

### Bezugszeichenliste

- 20: Flansch
- 21: Welle
- 22: inneres Kupplungsteil
- 24: zylindrische Innenbohrung
- 26: äußere Mantelfläche
- 28: äußeres Kupplungsteil
- 30: innere Mantelfläche
- 32: Zwischenraum
- 34: Dichtung
- 38: Achslinie
- 40: Außengewinde
- 42: Ringkörper
- 44: Stirnfläche
- 46: Axialbohrungen
- 48: Schraube
- 50: Endanschlag
- 52: Gewindebohrung
- 54: Markierung

## Patentansprüche

1. Vorrichtung zur demontierbaren, reibschlüssigen Kupplung zweier gleichachsiger Bauteile, insbesondere zweier Wellen oder einer Welle und einer Nabe, mit a) einem inneren Kupplungsteil (22), das eine kegelförmige, äußere Mantelfläche (26) aufweist, mit b) einem äußeren Kupplungsteil (28), das eine der Kegelform der äußeren Mantelfläche (26) angepasste kegelförmige innere Mantelfläche (30) aufweist, und c) mit einem Hydraulikanschluss, der mit einem Zwischenraum (32) kommuniziert, der radial durch die beiden Mantelflächen (26, 30) und axial durch zwei Dichtungen (34), die zwischen den Mantelflächen (26, 30) angeordnet sind, begrenzt ist, wobei i) in einer gekuppelten Position der Kupplung (22) die kegelförmigen Mantelflächen (26) reibschlüssig aufeinander aufliegen und ii) in einer gelösten Position der Zwischenraum (32) zwischen den beiden Mantelflächen (26, 30) mit Hydraulikfluid unter Druck gefüllt ist, zumindest ein Kupplungsteil (22) elastisch verformt ist und der Reibschluss aufgehoben ist und die beiden Kupplungsteile (22, 28) in Richtung einer gemeinsamen Längsachse reversibel relativ zueinander bewegbar sind, **dadurch gekennzeichnet, dass** eine Vielzahl von Schrauben (48) und ein Ringkörper (42) vorgesehen sind, dass der Ringkörper (42) gleichachsig zu den beiden Kupplungsteilen (22, 28) ist, dass der Ringkörper (42) mit einem Kupplungsteil (22) verbunden, insbesondere lösbar verbunden ist, dass der Ringkörper (42)
eine der Anzahl der Schrauben (48) entsprechende Anzahl von Axialbohrungen (46), die jeweils die Schrauben (48) aufnehmen, oder Abstützbereiche aufweist, an denen die Schrauben (48) anliegen, und dass entweder
- in einer Stirnfläche (44) des anderen Kupplungsteils (28) mit den Axialbohrungen (46) oder Abstützbereichen fluchtende Gewindebohrungen (52) ausgebildet sind,
- oder die Axialbohrungen (46) als Gewindebohrungen (52) ausgebildet sind und in axialer Verlängerung der Axialbohrungen (46) sich eine Stirnfläche (44) des anderen Kupplungsteils (28) befindet.

2. Vorrichtung nach Anspruch 1, **dadurch gekennzeichnet, dass** ein Kupplungsteil in Radialrichtung deutlich größere, insbesondere mindestens dreifach größere Abmessungen hat, und dass der Ringkörper (42) mit dem anderen Kupplungsteil (28) verbunden ist.

3. Vorrichtung nach einem der vorangegangenen Ansprüche, **dadurch gekennzeichnet, dass** der Ringkörper (42) ein Innengewinde aufweist, und dass ein Kupplungsteil (22) ein Außengewinde (40) aufweist, das dem Innengewinde angepasst ist und das sich im axialen Abstand von dem anderen Kupplungsteil (28) befindet.

4. Vorrichtung nach einem der vorangegangenen Ansprüche, **dadurch gekennzeichnet, dass** die Schrauben (48) eine Markierung aufweisen, die ihren Drehzustand anzeigt.

5. Vorrichtung nach einem der vorangegangenen Ansprüche, **dadurch gekennzeichnet, dass** dasjenige Kupplungsteil (22), das nicht mit dem Ringkörper (42) verbunden ist, am Ringkörper (42) anliegt, wenn die Vorrichtung sich in der gekuppelten Position befindet.

6. Vorrichtung nach einem der vorangegangenen Ansprüche, **dadurch gekennzeichnet, dass** der Ringkörper (42) einen Anschlag für die maximale axiale Bewegung desjenigen Kupplungsteils, mit dem der Ringkörper (42) nicht verbunden ist, bildet.

7. Vorrichtung nach einem der vorangegangenen Ansprüche, **dadurch gekennzeichnet, dass** eine Innenbohrung (24) des inneren Kupplungsteils (22) oder ein Außenmantel des äußeren Kupplungsteils (28) eine die Reibung erhöhende Beschichtung aufweist.

8. Vorrichtung nach Anspruch 7, **dadurch gekennzeichnet, dass** die Dichtungen (34) an demjenigen Kupplungsteil (22 bzw. 28) angeordnet sind, dass die Beschichtung aufweist.

9. Vorrichtung nach einem der vorangegangenen Ansprüche, **dadurch gekennzeichnet, dass** sie weiterhin einen Endanschlag (50) aufweist, der an einem Kupplungsteil befestigt ist und an dem das andere Kupplungsteil in der gekuppelten Position in Anschlag ist.
